# EUROPÄISCHE PATENTSCHRIFT

(11) **EP 0 852 298 B1**
(45) Veröffentlichungstag und Bekanntmachung des Hinweises auf die Patenterteilung: **19.03.2003**
(21) Anmeldenummer: 97121698.1
(22) Anmeldetag: 10.12.1997
(51) Int. Cl.: F16C 33/20

(54) **Gleitlagerwerkstoff und Verfahren zu seiner Herstellung**
Journal bearing material and method for manufacturing the same
Matériau pour paliers lisses et procédé de fabrication d'un tel matériau

(30) Priorität: 14.12.1996 DE 19652155; 04.12.1997 DE 19753639
(43) Veröffentlichungstag der Anmeldung: 08.07.1998
(73) Patentinhaber: Federal-Mogul Deva GmbH, 35260 Stadtallendorf (DE)
(72) Erfinder: Kraft, Erik, 35260 Stedtellendorf (DE); Roos, Udo, 35315 Homberg (DE); Schwerze, Hubert, Dr., 35037 Marburg (DE); Piesch, Thomas, 2102 Bisemberg (AT)

(56) Entgegenhaltungen:
- DE-A- 3 516 649
- GB-A- 707 065
- GB-A- 719 312
- GB-A- 754 115
- GB-A- 923 642
- US-A- 3 369 924

## Beschreibung

Die Erfindung betrifft eines selbstschmierenden, wartungsfreien und mehrschichtigen Gleitiagerwerkstoff sowie ein Verfahren zur Herstellung eines solchen selbstschmierenden, wartungsfreten, mehrschichtigen Glenlagerwerkstoffes, bestehend aus einer auf einem metallischen Stutzkorper poros aufgesinterten Bronzeschicht, deren Poren durch Vakuuminfiltration mit Polytetrafluorathylen (PTFE) gefullt sind. Ein ähnleiher Wertstoff und ein ähnleihes Verfahren, bei den ebenfall eine homogene. PTFE-Verteilung erreicht wird, ist aus der US-A-3369924 bekannt geworden.

Mehrschichtige Gleitlagerwerkstoffe werden in werten Gebieten der Technik z B in Maschinen der Nahrungs- und Haushaltsgerate-Industrie eingesetzt Die hohe Wirtschaftlichkeit druckt sich unter anderem durch den Verzicht auf komphzierte Schmiereinrichtungen aus

Aus gattungsgemaßen Glentlagerwerkstoffen hergestellte Lager sind bereits bekannt Derartige Lager bestehen aus einer auf einem Stahlband aufgesinterten porosen Bronzeschicht, in der eine Gletschicht aus PTFE/Ble abrißfest eingewalzt ist as der DE OS 35 16 649 ist ein selbstschmierendes Lager zu entnehmen Das Lager weist eine Schicht, bestehend aus einer Mischung aus Bletoxid und PTFE-Harz auf Die Schicht ist so ausgebildet, daß sie die Zwischenraume zwischen einer porosen Sintermetallschicht ausfullt und auch die Sintermetalischicht bedeckt Die aus PTFE und Bler bestehende Paste wird mit einer Beschichtungswalze auf die Sintermetallschicht aufgetragen

Aus der GB 707,065 ist ein Vakuummpragnierverfahren zur Einbettung von PTFE in die Poren einer metallischen Oberflache zu entnehmen Die Oberflache weist eine porose Schicht auf, jedoch wird uber die Porositat keine Angabe gemacht Aus der GB 754, 115 ist eine Bronzeschicht mit einem Poren-Volumen von 30% zu entnehmen Die Poren konnen durch a gendein Impragmerverfahren gefullt werden Die Porositat der Bronzeschicht wird durch Authringen eines Bronzepulvers mit einer bestimmten Korngroße erzeugt Die so gebildete Porositat reicht nicht aus, um uber die gesamte Dicke der Bronzeschicht eine gleichmaßige Impragnation zu erzeugen Der PTFE-Anteil ist an der Oberflache der Bronzeschicht großer als im tieferliegenden Bereich.

Der Erfindung liegt die Aufgabe zugrunde, einen speziellen Gleitlagerwerkstoff mit extrem medrigen Reibungskoeffizienten und Verschleißraten zu schaffen, der insbesondere auch fur den Einsatz in der Lebensmittelindustrie geergnet ist.

Diese Aufgabe wird erfindungsgemaß durch die Merkmale des Patentanspruch 10 gelöst, das durch der spezielle Verfahren nach Anspruch 1 enreicht wird. Auf diese spezielle Weise wird im begensatz zum bisherigen PTFE-Aufwalz- oder Impragnierverfahren eine homogen Gleitschicht erzeugt. die nicht über der Bronzeschicht heryorsteht, um so einen Uberzug oder eine Deckschicht zu bilden Durch das spezielle erfindungsgemaße Verfahren wird eine genau definierte Dichte bzw Porositat der Bronzeschicht erzeugt Die Porositat erstreckt sich von der Oberflache bis zum metallischen Stutzkorper nahezn gleichmaßig Damit ist die Voraussetzung geschaffen, das PTFE homogen im gesamten Gefuge zu verteilen, d.h. auch in der Nahe des Stutzkorpers ist PTFE in gleichem Maße vorhanden wie in den oberflachennahen Bereichen Das Zusammenwirken des Heißwalzvorganges mit der hohen Temperatur von ca 800°C ermoglicht eine definiert gesteuerte offene Porositat.

Durch die Vakuummfiltration ist einerseits ein homogenes Gefuge und andererseits auch eine bessere Haftung des PTFE-Materials gegeben Daruber hinaus wird dadurch gewahrlerstet, daß immer eine ausreichende und gleichmaßige Freisetzung des Schmiermittels ber gleichzeitig guten mechanischen und physikalischen Ergenschaften vorhegt Es kann auf zusatzliche Festschmierstoffe wie Blei oder Graphit verzichtet werden Einerseits wird hierdurch eine bessere Schwingungsdampfung gegenuber Giertlagerwerkstoffen mit zusatzlichen Festschmierstoffen erzeugt, andererseits erlaubt dies den Gleitlagerwerkstoff auch in der Lebensmittelindustrie einzusetzen.

Vorteilhafte Ausgestaltungen der Erfindung sind in den Unteransprüchen dokumentiert.

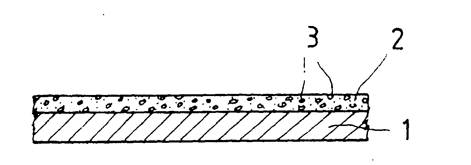

In der Zeichnung ist ein Schnitt durch einen erfindungsgemaß hergestellten Mehrschicht-Glertlagerwerkstoff wiedergegeben

Auf einem aus Stahl bestehenden Stutzkorper (1), der auch verkupfert sein kann, wird eine Bronzeschicht(2) mit einem Bronzepulver genau definierten Gewichts und Hohe aufgepulvert Die Bronze kann sowohl aus Elementenpulver als auch aus an- oder vorlegierten Pulvern hergestellt sein Der auf diese Weise aufgepulverte Stutzkorper (1) wird in einem Bandsinterofen bei definierter Temperatur voruesintert Nach dem Sintern erfolgt ein Heißwalzen bei exakt gefuhrter Temperaturfuhrung mit nachfolgendem Fertigsmtern Auf diese Weise entsteht eine Stahlmetallplatte mit einer definierten porosen Bronzeschicht (2) Dieses Produkt wird anschließend einem Behalter zugefuhrt und unter Vakuum gesetzt Dem Behalter wird dann eine PTFE-Suspension zugefuhrt, die im Wesentlichen aus Wasser, einem Emulgator und PTFE-Pulver besteht Nach genugend langer Infiltrationszeit wird die Suspension aus dem Behalter entfernt, der Glertlagerwerkstoff entnommen und einem Trockenofen zugefuhrt und anschließend durch Walzen kalt verdichtet Das PTFE (3) ist in den Poren der Bionzeschicht (2) eingelagert und fungiert als Festschmerstoff

Der Glertlagerwerkstoff kann anschließend spanend bearbeitet werden und es lassen sich Gleitlager in den unterschiedlichsten Abmessungen herstellen.

## Patentansprüche

1. Verfahren zur Herstellung eines selbstschmierenden, wartungsfreien und mehrschichtigen Gleniagerwerkstoffs, bestehend aus einer auf einem metallischen Stützkürper porös aufgesinterten Bronzeschicht, deren Poren durch Vakuuminfiltration mit Polytetrafluorethylen (PTFE) gefullt sind wobei das Verfaren die folgenden Schritte aufweist. Auftragen eines aus unterschiedlichen Korngrößen bestehenden Bronzepulvers mit einer mittleren Korngröße von etwa 40 µm und einer dendritischen Kornform auf den Stützkörper (1), Sintern der Bronzeschicht auf dem Stützkörper (1) in einem Ofen hei etwa 800 °C in einer Schutzgasatmosphäre, Heißwalzen des Stutzkörpers (1) zusammen mit der Bronzeschicht während des Sinterns zur Erzeugung einer Porosität zwischen 40 und 70% der Bronzeschicht (2) uber die gesamte Schichtdicke, Vakumminfiltration der Poren bis zu einem Gehalt an Polytetrafluorethylen (PTFE) von bis zu 20 Gew%, Verdichten der Bronzeschicht (2).

2. Verfahren nach Anspruch 1, **dadurch gekennzeichnet, daß** der Infiltrationszeitraum etwa 15 Minuten dauert

3. Verfahren nach Anspruch 1 und 2, **dadurch gekennzeichnet, daß** der Gleitlagerwerkstoff in einem Ofen bei einer Temperatur zwischen ca 40 und 90 °C getrocknet wird

4. Verfahren nach mindestens einem der Anspruche 1 und 3, **dadurch gekennzeichnet, daß** die PTFE-Suspension im Wesenthchen aus Wasser und PTFE-Teilchen (3) mit unterschiedlicher Größe besteht

5. Verfahren nach mindestens einem der Anspruche 1 bis 4, **dadurch gekennzeichnet, daß** die Bronzeschicht (2) durch kontinuierliche Erwärmung und kurzzeitiges Halten der Temperatur nach dein Heißwalzvorgang gesintert wird

6. Verfahren nach mindestens einem der Anspruche 1 bis 5, **dadurch gekennzeichnet, daß** die Bronze aus 80 bis 95 Gew % Kupfer und 5 bis 20 Gew % Zinn besteht

7. Verfahren nach mindestens einem der Anspruche 1 bis 5, **dadurch gekennzeichnet, daß** die Bronzeschicht aus den Legierungen Al, Zn, Pb, Mg besteht

8. Verfahren nach mindestens einem der Anspruche 1 bis 5, **dadurch gekennzeichnet, daß** die Bronzeschicht (2) aus Cu 87 Sn 13 besteht

9. Verfahren nach mindestens einem der Anspruche 1 bis 8, **dadurch gekennzeichnet, daß** die Schichtdicke der Bronzeschicht etwa 0.5 bis 10 mm betragt

10. Selbstschmierenden, wartungsfreien und mehrschichtigen Gleitlagerwerkstoff bestehend aus einer auf einem metallischen Stützkörper porös aufgesinterten Bronzeschicht, deren Poren mit Polytetrafluorathylen (PTFE) gefullt sind, hergeitellt nach dem Verfaren nach Anspruch 1 wobei das Polytetrafluorathylen (PTEF) (3) über die Höhe der Bronzeschicht (2) homogen verteilt angeordnet ist und als Gleitschicht fungiert, wobei die Gleitschicht nicht über die Oberfläche der Bronzeschicht (2) hervorsteht.

## Claims

1. Method for producing a self-lubricating, maintenance-free, multilayer journal bearing material, comprising a bronze layer sintered porously upon a metallic support body, the pores of which layer are filled with polytetrafluoroethylene (PTFE) by means of vacuum infiltration, the method having the following steps: application of a bronze powder made of different particle sizes, having an average particle size of approximately 40 mm and a dendritic particle shape, upon the support body (1), sintering of the bronze layer upon the support body (1) in a furnace at approximately 800°C in a protective gas atmosphere, hot rolling of the support body (1) together with the bronze layer during the sintering in order to produce a porosity between 40 and 70% of the bronze layer (2) over the entire layer thickness, vacuum infiltration of the pores up to a content of polytetrafluoroethylene of up to 20% by weight compaction of the bronze layer (2).

2. Method according to claim 1, **characterised in that** the infiltration period lasts approximately 15 minutes.

3. Method according to claim 1 and 2, **characterised in that** the journal bearing material is dried in an oven at a temperature between approximately 40 and 90°C.

4. Method according to at least one of the claims 1 and 3, **characterised in that** the PTFE suspension comprises substantially water and PTFE particles (3) of different sizes.

5. Method according to at least one of the claims 1 to 4, **characterised in that** the bronze layer (2) is sintered by means of continuous heating and short-term maintenance of the temperature after the hot rolling process.

6. Method according to at least one of the claims 1 to 5, **characterised in that** the bronze comprises 80 to 95% by weight of copper and 5 to 20% by weight of tin.

7. Method according to at least one of the claims 1 to 5, **characterised in that** the bronze layer comprises Al, Zn, Pb, Mg alloys.

8. Method according to at least one of the claims 1 to 5, **characterised in that** the bronze layer (2) comprises Cu 87 Sn 13.

9. Method according to at least one of the claims 1 to 8, **characterised in that** the layer thickness of the bronze layer is approximately 0.5 to 10 mm.

10. Self-lubricating, maintenance-free, multilayer journal bearing material, comprising a bronze layer sintered porously upon a metallic support body, the pores of which layer are filled with polytetrafluoroethylene (PTFE), produced according to the method according to claim 1, the polytetrafluoroethylene (3) being disposed homogeneously distributed over the height of the bronze layer (2) and functioning as journal bearing layer, the journal bearing layer not projecting beyond the surface of the bronze layer (2).

## Revendications

1. Procédé pour la fabrication d'un matériau de palier à glissement autolubrifiant sans entretien et multi-couches, constitué à partir d'une couche de bronze poreuse, frittée sur un substrat métallique, les pores de la couche de bronze étant remplis par infiltration sous vide de polytétrafluoréthylène (PTFE), le procédé comprenant les étapes suivantes : appliquer sur le substrat (1) une poudre de bronze constituée de tailles de grain variables ayant une taille de grain moyenne d'environ 40 µm et une forme de grain dendritique, fritter la couche de bronze sur le substrat (1) dans un four à environ 800° C dans une atmosphère contrôlée, laminer à chaud le substrat (1) ensemble avec la couche de bronze pendant le frittage pour obtenir une porosité située entre 40 et 70% de la couche de bronze (2) sur l'épaisseur de couche totale, infiltrer sous vide les pores jusqu'à une teneur en polytétrafluoréthylène (PTFE) allant jusqu'à 20% en poids, densifier la couche de bronze (2).

2. Procédé selon la revendication 1, **caractérisé en ce que** la période d'infiltration dure environ 15 minutes.

3. Procédé selon la revendication 1 ou 2, **caractérisé en ce que** le matériau de palier à glissement est séché dans un four à une température située environ entre 40 et 90°C.

4. Procédé selon l'une des revendications 1 et 3, **caractérisé en ce que** la suspension de PTFE est essentiellement constituée d'eau et de particules de PTFE (3) ayant des tailles variables.

5. Procédé selon l'une au moins des revendications 1 à 4, **caractérisé en ce que** la couche de bronze (2) est frittée avec un réchauffement continu et un maintien temporaire de la température après le processus de laminage à chaud.

6. Procédé selon l'une au moins des revendications 1 à 5, **caractérisé en ce que** le bronze est constitué de 80 à 95% en poids de cuivre et de 5 à 20% en poids d'étain.

7. Procédé selon l'une au moins des revendications 1 à 5, **caractérisé en ce que** la couche de bronze est constituée des alliages Al, Zn, Pb, Mg.

8. Procédé selon l'une au moins des revendications 1 à 5, **caractérisé en ce que** la couche de bronze (2) est constituée de Cu 87 Sn 13.

9. Procédé selon l'une au moins des revendications 1 à 8, **caractérisé en ce que** l'épaisseur de couche de la couche de bronze est de l'ordre d'environ 0,5 à 10 mm.

10. Matériau de palier à glissement autolubrifiant sans entretien et multi-couches constitué à partir d'une couche de bronze poreuse, frittée sur un substrat métallique, les pores de la couche de bronze étant remplis de polytétrafluoréthylène (PTFE), le matériau étant fabriqué selon le procédé de la revendication 1, le polytétrafluoréthylène (PTFE) (3) étant réparti de manière homogène sur la hauteur de la couche de bronze (2) et faisant fonction de couche de glissement, la couche de glissement ne faisant pas saillie au-delà de la surface supérieure de la couche de bronze (2).
